# EUROPÄISCHE PATENTANMELDUNG

(11) **EP 2 280 227 A2**
(43) Veröffentlichungstag der Anmeldung: **02.02.2011**
(21) Anmeldenummer: 10168518.8
(22) Anmeldetag: 06.07.2010
(51) Int. Cl.: F24D 11/02, F24H 7/04

(54) **System zum Speichern und Wiederverwenden von Wärme**

(30) Priorität: 20.07.2009 AT 11322009
(71) Anmelder: Plasch, Michael, 9074 Keutschach (AT)
(72) Erfinder: Plasch, Michael, 9074 Keutschach (AT)
(74) Vertreter: Kontrus, Gerhard

(57) **Zusammenfassung**

Beschrieben ist ein System zum Speichern und Wiederverwenden von Wärme, enthaltend einen Wärmekollektor, einen ersten Wärmespeicher mit einem ersten Speichermedium und einen zweiten Wärmespeicher mit einem zweiten Speichermedium,
**dadurch gekennzeichnet, dass**
- der Wärmekollektor zumindest den ersten Wärmespeicher über eine Kollektorleitung speist,
- der erste Wärmespeicher mit dem der zweite Wärmespeicher über eine Wärmepumpen-Anordnung verbunden ist,
- die Wärmepumpen-Anordnung zumindest einen Kompressor, einen Verdampfer, einen Kondensator, und ein Expansionsventil umfasst,
- der erste Wärmespeicher den Verdampfer enthält und
- der zweite Wärmespeicher den Kondensator.

## Beschreibung

Die Erfindung betrifft ein System zum Speichern und Wiederverwenden von Wärme.

Als Wärmequelle kommen z.B. Sonnenenergie, Erdwärme, Grundwasser, Seewasser, Abwasser oder Abwärme von Industrieanlagen in Betracht. Diese Wärmequellen werden mit Hilfe von Wärmekollektoren erschlossen. Sonnenenergie wird mit Sonnenkollektoren gesammelt.

Ein Nachteil der Sonnenenergie ist zum Beispiel, dass Energie nur dann dem Wärmespeicher zugeführt werden kann, wenn die Temperatur des Sonnenkollektors wesentlich höher ist als die Temperatur des Wärmespeichers.

Wärmequellen die eine niedrigere Temperatur zur Verfügung stellen, wie z.B. Erdwärme, Grundwasser, Sonnenenergie an bedeckten Tagen, können so nicht erschöpft werden. Für Wärmequellen, die niedrige Temperaturen anbieten, werden typischerweise Wärmepumpen verwendet, wie z.B. Erdwärmeheizungen.

Erfindungsgemäß wird die Aufgabe gelöst indem ein System zum Speichern und Wiederverwenden von Wärme zur Verfügung gestellt wird. Das erfindungsgemäße System enthält einen Wärmekollektor, einen ersten Wärmespeicher mit einem ersten Speichermedium und einen zweiten Wärmespeicher mit einem zweiten Speichermedium,

Das System zeichnet sich dadurch aus, dass der Wärmekollektor zumindest den ersten Wärmespeicher über eine Kollektorleitung speist, der erste Wärmespeicher mit dem der zweite Wärmespeicher über eine Wärmepumpen-Anordnung verbunden ist, die Wärmepumpen-Anordnung zumindest einen Kompressor, einen Verdampfer, einen Kondensator, und ein Expansionsventil umfasst, der erste Wärmespeicher den Verdampfer enthält und der zweite Wärmespeicher den Kondensator.

Dabei hat während des Betriebes der erste Wärmespeicher typischerweise eine niedrigere Temperatur als der zweite Wärmespeicher. Der erste Wärmespeicher kann so von einem Kollektor, der eine relativ niedrige Temperatur hat, mit Wärme gespeist werden. Die Wärmepumpenanordnung entzieht wiederum dem ersten Wärmespeicher Wärme bei niedriger Temperatur und führt Wärme dem zweiten Wärmespeicher bei höherer Temperatur zu. Bei Verwendung von Wärmetauschern, die zwischen den Wärmespeichern und der Wärmepumpe geschaltet werden, treten Leistungsverluste auf. Dadurch, dass der erste Wärmespeicher direkt den Verdampfer der Wärmepumpenanordnung und der zweite Wärmespeicher direkt den Kondensator der Wärmepumpenanordnung enthalten, können diese Leistungsverluste effizient vermieden werden.

Mit so einer Anordnung kann Wärme, die von einem Kollektor mit niedriger Temperatur geliefert wird, in einen ersten Wärmespeicher geführt werden und auch dort bei niedriger Temperatur gespeichert werden, was den Vorteil bringt, dass die Verluste durch Abwärme gering bleiben. Bei Bedarf (z.B. wenn die Speichertemperatur des zweiten Speichers unter einen bestimmten Wert gesunken ist) wird mit Hilfe der Wärmepumpe Wärme aus dem ersten Wärmespeicher entnommen und dem zweiten Wärmespeicher bei höherer Temperatur zugeführt.

In einer vorteilhaften Ausführungsform ist zumindest der erste Wärmespeicher ein Latentwärmespeicher und enthält als erstes Speichermedium ein Phasenumwandlungsmittel. Dieses Phasenumwandlungsmittel kann im einfachsten Fall Wasser sein oder ein spezielles üblicherweise aus Parafinen bestehendes Phasenumwandlungsmittel.

Wird Wasser als Phasenumwandlungsmittel verwendet, so ist der signifikante Volumenzuwachs bei der Umwandlung von flüssigem Wasser zu Eis für die Konstruktion des ersten Wärmespeichers zu berücksichtigen. Dies kann z.B. dadurch geschehen, dass entsprechende Dehnungsfalten im Mantel des Wärmespeichers vorgesehen werden.

Vorteilhafterweise werden Phasenumwandlungsmittel verwendet, wobei der Erweichungspunkt oder der Schmelzpunkt des
Phasenumwandlungsmittels im Bereich zwischen -10°C und 25°C liegt. Für diesen Bereich haben sich parafinhältige Phasenumwandlungsmittel als vorteilhaft herausgestellt. Alternativ können auch Salze mit einem hohen Kristallwassergehalt eingesetzt werden, die bei höherer Temperatur sich in ihrem eigenen Kristallwasser lösen.

Eine Ausführungsform zeichnet sich dadurch aus, dass der Verdampfer eine Verdampferleitung umfasst, die durch den ersten Wärmespeicher führt, wobei im Inneren der Verdampferleitung das Kältemittel geführt wird, und dass die Außenwand der Verdampferleitung direkt das erste Speichermedium berührt. Dadurch kann durch Verdampfen des Kältemittels direkt dem ersten Speichermedium Wärme entzogen werden.

Vorteilhafterweise ist zumindest ein Teil der Verdampferleitung, die sich im ersten Wärmespeicher befindet, als Wellschlauch (vorzugsweise Metallwellschlauch) ausgebildet. Dadurch können nicht nur Wärmedehnungen effizient ausgeglichen werden, es erhöht sich auch die Oberfläche, die für den Wärmeübergang vom Kältemittel der Wärmepumpe zum ersten Speichermedium im ersten Wärmetauscher zu Verfügung steht. Ein weiterer Vorteil der Verwendung eines Wellschlauches ist die erhöhte Druckbeständigkeit.

In einer weiteren Ausführungsform wird der vom Expansionsventil kommende Teil der Verdampferleitung in einem äußeren Bereich des ersten Wärmespeichers geführt, und der zum Kompressor führende Teil der Verdampferleitung wird in einem inneren Bereich geführt, wobei sich der äußere Bereich außerhalb des inneren Bereiches um den inneren Bereich befindet. Dies ist besonders bei der Verwendung von Phasenumwandlungsmitteln in einem Latentwärmespeicher von Vorteil, da beim Entziehen der Wärme aus dem ersten Wärmespeicher zuerst der äußere Bereich des Phasenumwandlungsmittels fest wird, und dann der innere Bereich.

Vorteilhafterweise umfasst der Kondensator eine Kondensatorleitung (ausgelegt für einen Druck von mindestens 10 bar), die durch den zweiten Wärmespeicher führt, wobei im Inneren der Kondensatorleitung ein Kältemittel geführt wird, und die Außenwand der Kondensatorleitung direkt das Speichermedium (z.B. Wasser) berührt.

In einer Ausführungsform zumindest ist ein Teil der Kondensatorleitung, die sich im zweiten Wärmespeicher befindet, als Wellschlauch (vorzugsweise Metallwellschlauch) ausgebildet. Dadurch können nicht nur Wärmedehnungen effizient ausgeglichen werden, es erhöht sich auch die Oberfläche, die für den Wärmeübergang vom Kältemittel der Wärmepumpe zum zweiten Speichermedium im zweiten Wärmetauscher zur Verfügung steht. Ein weiterer Vorteil der Verwendung eines Wellschlauches ist die erhöhte Druckbeständigkeit, da die Kondensatorleitung einem Druck von bis zu über 40 bar standhalten muss.

In einer weiteren Ausführungsform bei Verwendung von Latentwärmespeichern werden Expansionsventil und Kompressor so eingestellt oder so gewählt, dass sich in der Verdampferleitung ein Druck ergibt, der zu einer Verdampfungstemperatur des Kältemittels führt, die weniger als 15K von dem Schmelzpunkt oder dem Erweichungspunkt des Phasenumwandlungsmittels abweicht.

Dabei kann eine Steuerung vorgesehen sein, die den Kompressor und/oder das Expansionsventil in Abhängigkeit der an einem Messpunkt des zweiten Wärmespeichers gemessen Temperatur steuert.

Auch kann das Expansionsventil und der Kompressor so eingestellt oder so gewählt werden, dass sich in der Kondensatorleitung ein Druck ergibt, der zu einer Kondensationstemperatur des Kältemittels führt, die weniger als 15K von der an einem Messpunkt des zweiten Wärmespeichers gemessenen Temperatur abweicht.

Bei einer weiteren Ausführungsform kann die Wärmequelle auch den zweiten Wärmespeicher speisen, wobei entsprechende Leitungen und Ventile vorgesehen sind und eine Steuerung vorgesehen ist, die diese Ventile schaltet. Dadurch ergibt sich die Möglichkeit, dass, wenn beim Wärmekollektor eine höhere Temperatur anliegt, diese Wärme direkt in den zweiten Wärmespeicher geleitet werden kann.

Vorteilhafterweise ist eine Steuerung vorgesehen, die in Abhängigkeit der Temperatur, die der Wärmekollektor zur Verfügung stellt, zwischen dem ersten Wärmespeicher und dem zweiten Wärmespeicher hin und her geschalten werden kann. Hier können auch Leitungen, Ventile (oder Pumpen) und eine Steuerung zum Schalten der Ventile (oder Pumpen) vorgesehen sein, die die Kollektorleitung, die vom zweiten Wärmespeicher kommt, mit der Kollektorleitung, die den ersten Wärmespeicher speist, verbindet.

Weitere Aspekte der Erfindung betrifft einen Latentwärmespeicher für eines der vorgeschriebenen Systeme.

Der erste Wärmespeicher kann mit einer Zusatzheizung ausgestattet sein, um die Temperatur des ersten Speichermediums um 1 - 5K anzuheben, was den Wirkungsgrad der Wärmepumpenanordnung signifikant erhöhen kann.

Ein weitere Aspekt der Erfindung betrifft einen Wärmetauscher zur Installation im zweiten Wärmespeicher für eines der Systeme.

So ein Wärmetauscher ist in vorteilhafter Weise **dadurch gekennzeichnet, dass** dieser eine Hülle mit Öffnungen umfasst, sodass der Teil des Wärmetauschers, der die Kondensatorleitung beinhaltet, in direkter Fluidkommunikation mit dem Speichermedium des zweiten Wärmespeichers steht. Dadurch kann das Speichermedium des zweiten Speichers angetrieben durch die Wärmekonvektion kaminartig durch den Wärmetauscher strömen, was die Leistung des Wärmetauschers erhöht.

Weitere Details der Erfindung ergeben sich durch die Figuren und die zugehörige nachstehende Beschreibung.

Fig. 1 zeigt eine schematische Darstellung eines Fließschemas einer Ausführungsform gemäß der Erfindung.

Fig. 2 zeigt einen Schrägriss der Wärmespeicher mit Wärmepumpe und Brauchwassermodul.

Fig. 3a zeigt einen Schrägriss eines Moduls eines Latentwärmespeichers

Fig. 3b zeigt eine Zusatzheizung für ein Modul eines Latentwärmespeichers

Fig. 4a-b zeigen verschiedene Ansichten eines ersten Wärmetauschers des zweiten Wärmespeichers

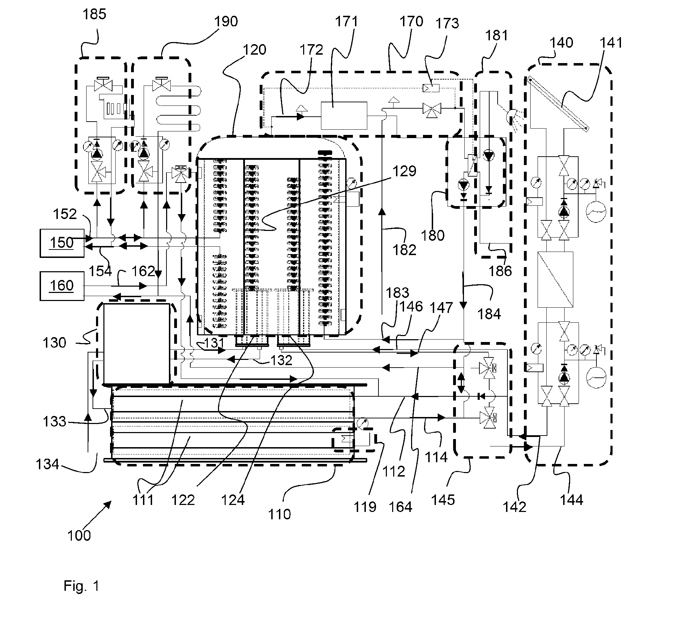

Das System 100 (Fig. 1) besteht aus einem Latentwärmespeicher (erster Wärmespeicher, Kaltspeicher) 110, einem Warmwasserspeicher (zweiter Wärmespeicher, Warmspeicher) 120, einer Wärmepumpe 130, einer Solaranlage 140, einem optionalen Brenner 150, einer optionalen Abwärmequelle 160, einem Durchlauferhitzer mit Steuerung 170, einem Brauchwassermodul 180, optionalen Hochtemperaturheizung mit Heizungssteuerung 185 und einer Niedrigtemperaturheizung 190

Der Latentwärmespeicher (erster Wärmespeicher, Kaltspeicher) 110 besteht aus mehreren (z.B. 8 Stück) Speichermodulen 111, wobei jedes Speichermodul ca. 50 I Speichermedium (Phasenänderungsmittel) enthält. Der Latentwärmespeicher dient zur Speicherung von Wärme bei niedriger Temperatur, die z.B. von einer Abwärmequelle 160 über die Abwärmeleitung 162 oder von der Solaranlage 140 über die Solarleitung 142 (z.B. bei bedecktem Wetter) geliefert wird. Der Latentwärmespeicher wird typischerweise bei Temperaturen im Bereich von 0°C und 30°C geladen. Auch kann der Latentwärmespeicher 110 über die Retourleitung 147 vom zweiten Wärmetauscher 124 geladen werden. Dadurch kann die Wärme, die von der Solaranlage 140 geliefert wird, noch besser genützt werden. Sollte zu wenig Wärme zur Verfügung stehen, kann der erste Wärmespeicher auch über eine Zusatzheizung 119 (z.B. elektrische Infrarot-Heizung) erwärmt werden, was vorzugsweise über Strom zu günstigem Tarif (z.B. so genannten Nachtstrom) erfolgen kann.

Die Wärme in den Latentwärmespeicher wird über die Speicherleitung 112 geliefert. Die Retourleitung aus dem Latentwärmespeicher ist die Speicherleitung 114.

Die Steuerung, die die Wärmequelle für den Latentwärmespeicher 110 vorgibt, erfolgt über die Ventilgruppe 145.

Der Warmwasserspeicher 120 ist der zweite Wärmespeicher bzw. der Warmspeicher. Innerhalb des zweiten Wärmespeichers 120 sind ein erster Wärmetauscher 122, der den Kondensator der Wärmepumpe beinhaltet und ein zweiter Wärmetauscher 124 enthalten. Zur exakteren Schichtung des Speichermediums im Wärmetauscher von unten nach oben nach steigender Temperatur ist innerhalb des Wärmetauschers eine Vielzahl von Verteilerglocken 129 angeordnet.

Die Wärmepumpe 130 beinhaltet zumindest den Kompressor, das Expansionsventil und eine Steuerung zum Steuern von Kompressor und Expansionsventil. In der Wärmepumpe 130 wird ein Kältemittel komprimiert und über die Kondensatorleitung 131 vom Kompressor zum Kondensator, der sich im ersten Wärmetauscher 122 im zweiten Wärmespeicher 120 befindet, geführt. Dort kondensiert das Kältemittel an der Innenwand der Kondensatorleitung und gibt so direkt die Wärme an den zweiten Wärmespeicher 120 ab. Das verflüssigte Kältemittel fließt dann über die Kondensatorleitung 132 vom Kondensator zum Expansionsventil. Durch die adiabatische Entspannung wird das Kältemittel abgekühlt. Der Saugdruck wird durch die Regelung des Kompressors in der Wärmepumpe so eingestellt, dass die Sattdampftemperatur des Kältemittels unterhalb der Temperatur des ersten Wärmetauschers liegt. Das Kältemittel wird über die Verdampferleitung 133 vom Expansionsventil zum Verdampfer geleitet. In dem Verdampfer, der Element des zweiten Wärmespeichers ist, wird Wärme vom zweiten Speichermedium an das Kältemittel direkt übertragen und führt zum Verdampfen des Kältemittels. Das verdampfte Kältemittel wird über die Verdampferleitung 134 wiederum zum Kompressor geleitet und dort komprimiert.

Die Solaranlage 140 beinhaltet zumindest die Sonnenkollektoren 141 und eine Pumpengruppe mit zugehöriger Steuerung. Der Flüssigkeitskreislauf der Sonnenkollektoren kann vom Speicherkreislauf (142, 144) getrennt und über einen Wärmetauscher verbunden sein. Die Wärme wird über die Solarleitung 142 and die Wärmespeicher (110, 120) geliefert, wobei die Speicherleitung 144 die Wärmeträgerflüssigkeit an die Solaranlage zurückführt. Die Wärme von der Solaranlage wird über die Speicherleitung 146 zum zweiten Wärmetauscher 124 geführt und dort an den zweiten Wärmespeicher 120 abgegeben.

Mit der Ventilgruppe 145 für die Solaranlage wird der Fluss der Wärmeträgerflüssigkeit so gesteuert, dass entweder der erste Wärmespeicher 110 oder der zweite Wärmespeicher 120 oder der zweite nach dem ersten Wärmespeicher gespeist wird.

Der optionale Brenner 150 versorgt über die Brennerleitungen (Vorlaufleitung 152, Rücklaufleitung 154) direkt den Hochtemperaturheizkreis 185, den Niedertemperaturheizkreis 190 und/oder den zweiten Wärmespeicher 120. Die Vorlauftemperatur für den Hochtemperaturheizkreis liegt im Bereich von 30°C bis 80°C, während die Vorlauftemperatur für den Niedertemperaturheizkreis im Bereich von 25°C bis 40°C liegt. Die beiden Heizkreise entnehmen die Wärmeträgerflüssigkeit mit Hilfe der dem jeweiligen Heizkreis zugeordneten Pumpengruppen. Ist der Brenner 150 nicht in Betrieb, oder falls kein Brenner angeschlossen ist, entnehmen die beiden Heizkreise die benötigte Wärme aus dem Hochtemperaturspeicher- d.h. dem zweiten Wärmespeicher 120.

Die optionale Abwärmequelle 160 (z.B. aus Maschinenabwärme) versorgt über die Abwärmeleitung 162 den ersten Wärmespeicher 110 oder den zweiten Wärmespeicher 120, wobei dies in Abhängigkeit der zur Verfügung stehenden Temperatur geregelt wird. Die Leitung 164 führt die Wärmeträgerflüssigkeit wieder zurück zur Abwärmequelle 160.

Die Warmwasserbereitung 170 stellt über die Leitungen 172 und 182 Wärme für das Brauchwasser aus dem Warmspeicher (zweiten Wärmespeicher 120) zur Verfügung, wobei die Leitung 172 die Wärme aus dem Kopf des zweiten Wärmespeichers mit höherer Temperatur entnimmt und die Leitung 182 die Wärme bei niedriger Temperatur entnimmt. Mit Hilfe der Regelung 173 wird ein Mischventil gesteuert in Abhängigkeit der zur Verfügung stehenden Temperaturen in den Leitungen 172 und 182. Ist die Temperatur am Kopf des zweiten Wärmetauschers zu gering, wird der Durchlauferhitzer 171 hinzugeschaltet.

Das Brauchwassermodul 180 erwärmt über einen Wärmetauscher das von Leitung 186 kommende Frischwasser. Das Warmwasser steht dann der dem Warmwasserspender 181 (z.B. Dusche) zur Verfügung.

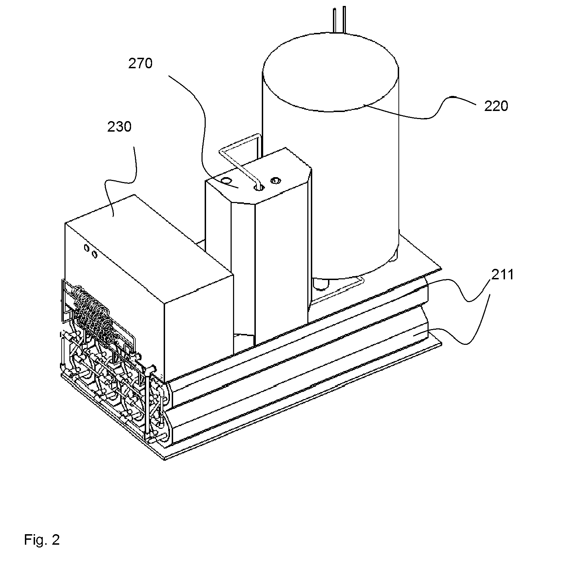

Fig. 2 zeigt einen Schrägriss der Wärmespeicher mit Wärmepumpe 230 und Brauchwassermodul 270. Acht Latentwärmespeicher 211 sind liegend in zwei aufeinander liegenden Gruppen von je vier Modulen 211 angeordnet. Darüber befindet sich eine Trägerplatte, die Wärmepumpe 230, das Brauchwassermodul 270 und der zweite Wärmespeicher 220. Die Latentwärmespeicher 211 sind sowohl bezüglich der Einspeisung der Solarwärme als auch bezüglich der Anschlüsse zur Wärmepumpe parallel geschalten. Sowohl Kondensatorleitungen als auch Solarleitungen, jeweils von und zum Latentwärmespeicher, werden von der gleichen Seite in den Latentwärmespeicher geführt.

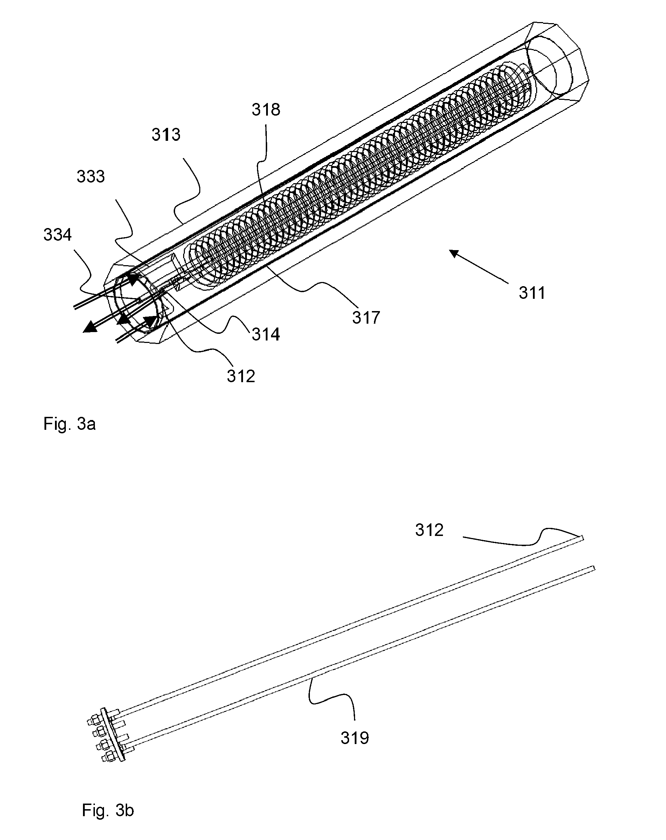

Fig. 3a zeigt einen Latentwärmespeicher 311, sodass man die Leitungsführung innerhalb des Latentwärmespeichers erkennen kann. Der Latentwärmespeicher 311 besteht aus einem Zylinder 317 der von einer Wärmedämmung 313 umgeben ist (z.B. ein Dewargefäß ummantelt mit Polyurethanschaum oder nur ein Polyurethanschaummantel). Die von der Wärmequelle kommende Speicherleitung 312 wird vom Zylinderdeckel in den Kern des Zylinders bis zum Zylinderboden geführt und von dort in Schraubenform gewickelt im äußeren Drittel des Zylinders (d.h. nahe dem Zylindermantel) wieder zurück zum Zylinderdeckel geführt und als Speicherleitung 314 zurück zur Wärmequelle geführt. Die Verdampferleitung 333 wird vom Expansionsventil kommend in Schraubenform gewickelt zum Zylinderboden geführt und zwar parallel zur in Schraubenform gewickelten Speicherleitung, wodurch sich eine Art Doppelhelix 318 ergibt. Darauf wird die Verdampferleitung im Kern zurück zum Zylinderdeckel geführt, und von dort über die Verdampferleitung 334 zurück zum Kompressor. Die Flussrichtung von Kältemittel in der Verdampferleitung und Wärmeträgerflüssigkeit in der Speicherleitung werden so im Gegenstromprinzip geführt. Die Verdampferleitung ist ein Edelstahlwellschlauch mit einem Innendurchmesser von ½" (ca. 12,8 mm). Der Raum zwischen den Leitungen und der Zylinderwand wird komplett mit einem Phasenänderungsmittel (Parafin mit einem Erweichungspunkt von -5 bis 15°C, vorzugsweise 6°C) gefüllt. Dadurch, dass die Wärmeträgerflüssigkeit in der Speicherleitung nahe der Zylinderachse zugeführt wird, wird der Kern des Phasenänderungsmittels zuerst aufgeschmolzen.

Fig. 3b zeigt eine Zusatzheizung für ein Modul eines Latentwärmespeichers deren Infrarotheizstab 319 in den Zylinder 317 des Latentwärmespeichers zwischen Kern und Doppelhelix 318 eingeführt werden kann. An der Spitze des zweiten zum Infrarotheizstab 319 parallel geführten Stabes befindet sich ein Thermometer 312 zur Messung der Kerntemperatur des Latentwärmespeichers nahe dem Zylinderboden. Die Zusatzheizung wird dazu verwendet, im Bedarfsfall die Temperatur des Latentwärmespeichers um 1 - 5K zu erhöhen, wodurch der Wirkungsgrad der Wärmepumpenanordnung signifikant erhöht werden kann.

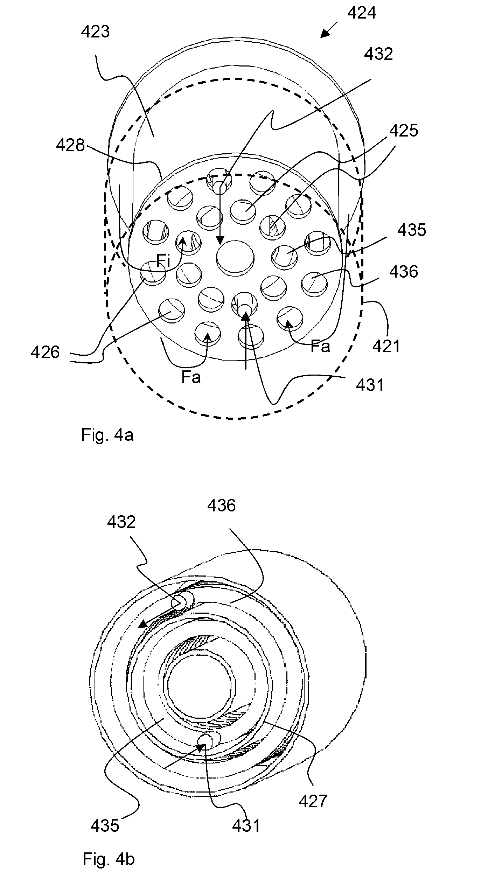

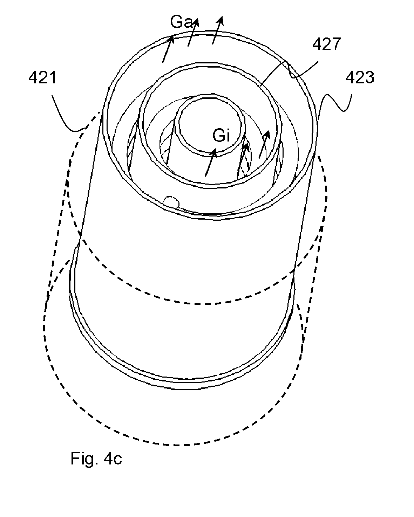

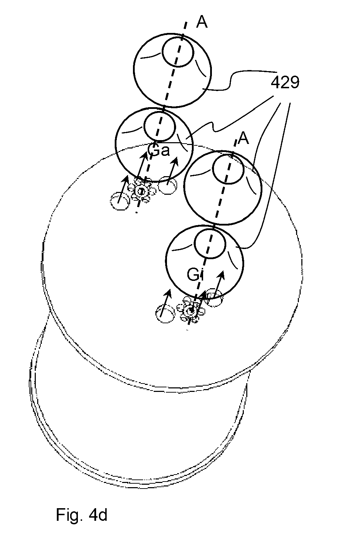

Die Figuren 4a-4b zeigen verschiedene Ansichten eines ersten Wärmetauschers, der einen Kondensator der Wärmepumpenanordnung enthält, der so direkt die Wärme des Kältemittels an den zweiten Wärmespeicher übergeben kann.

Fig. 4a zeigt den ersten Wärmetauscher 422 in einer Schrägrissansicht schräg von unten, wobei die gestrichelten Linien den Teil des Wärmespeichergehäuses 421 beschreiben, der das Gehäuse 421 des Wärmetauschers 422 darstellt.

Fig. 4b zeigt den ersten Wärmetauscher 422 in einer Schrägrissansicht schräg von unten, wobei der Lochboden 428 des Wärmetauschers 422 in der Darstellung weggelassen wurde.

Das Gehäuse des Wärmetauschers ist an den Wärmespeicher angeflanscht. Der Wärmetauscher 422 ist so in dem Gehäuse 421 eingebettet, dass ein Bereich zwischen dem Mantel 423 des Wärmetauschers und dem Gehäuse frei bleibt, der einen Strömungsquerschnitt von mindestens 100 cm² hat, sodass das Speichermedium zwischen Mantel 423 und Gehäuse 421 nach unten fließen kann. Auch muss ein entsprechender Abstand zwischen dem Gehäuseboden und dem Lochboden 428 des Wärmetauschers. Der Lochboden besitzt eine Schar konzentrisch angeordneter innerer Zuführungsöffnungen 425 und eine Schar konzentrisch angeordneter äußerer Zuführungsöffnungen 426. Der Wärmetauscher ist in einen inneren Bereich und einen äußeren Bereich geteilt, wobei die beiden Bereiche durch eine Zylinderwand (Zwischenmantel 427), die konzentrisch zum Mantel 423 des Wärmetauschers innerhalb des Mantels 427 liegt, getrennt sind. Die von der Wärmepumpe kommende Kondensatorleitung 431 wird durch den Gehäuseboden, und den Lochboden 428 in den inneren Bereich des Wärmetauschers geführt (d.h. innerhalb des Zwischenmantels 427), und in einer inneren Wicklung 435 schraubenförmig nach oben geführt und dann zwischen Zwischenmantel 427 und Mantel 423 in einer äußeren Wicklung 436 wieder schraubenförmig nach unten geführt. Dann wird die Kondensatorleitung 432 durch den Lochboden 428 aus dem Wärmetauscher und den Gehäuseboden aus dem Wärmespeicher geführt.

Bei Betrieb der Wärmepumpe erwärmt die Kondensatorleitung 435, 436 das Speichermedium (Speicherflüssigkeit) des zweiten Wärmespeichers, wodurch die Speicherflüssigkeit innerhalb des Wärmetauschers durch Konvektion nach oben strömt. Die kühlere Speicherflüssigkeit fließt über den Zwischenraum zwischen Mantel 423 des Wärmetauschers und Gehäuse 421 nach unten und durch die Öffnungen 425, 426 des Lochbodens 428 in den Wärmetauscher und an den Kondensatorleitungen vorbei. Dabei ergeben sich im Wesentlichen zwei von einander getrennte Strömungen. Nämlich eine innere Strömung (Einströmung Fi, Ausströmung Gi) durch die inneren Zuführungsöffnungen 425 des Lochboden 428 in den inneren Bereich innerhalb des Zwischenmantel 427 vorbei an der inneren Wicklung 435 der Kondensatorleitung und eine äußere Strömung (Einströmung Fa, Ausströmung Ga) durch die äußeren Zuführungsöffnungen 426 des Lochboden 428 in den inneren Bereich zwischen Zwischenmantel 427 und Mantel vorbei an der äußeren Wicklung 435 der Kondensatorleitung.

Der Wärmetauscher ist oben mit einem Deckel geschlossen, der innere Ausströmöffnungen für den inneren Bereich (für die innere Ausströmung Gi) und Ausströmöffnungen für den äußeren Bereich des Wärmetauschers (für die äußere Ausströmung Ga) aufweist.

Die innere Wicklung 435 hat während des Betriebes der Wärmepumpe eine höhere Temperatur als die äußere Wicklung 436, weshalb die inner Ausströmung Gi vom inneren Bereich auch eine höhere Temperatur aufweist als die äußere Ausströmung Ga. Damit die ausströmende erwärmte Speicherflüssigkeit sich möglichst wenig mit der umgebenden Speicherflüssigkeit mischt, sind über den jeweiligen Ausströmöffnungen eine Vielzahl (z.B. 20 Stück, koaxial zu einer senkrechten Achse A die als gestrichelte Line dargestellt ist) von Verteilerglocken 429 angebracht. Dadurch wird ermöglicht, dass die Speicherflüssigkeit, die aus den jeweiligen Austrittsöffnungen austritt, entsprechend ihrer Temperatur in der entsprechenden Schicht des Wärmespeichers geschichtet wird; d.h. die Speicherflüssigkeit mit höherer Temperatur wird demgemäß näher dem Kopf des Wärmespeichers geschichtet.

## Patentansprüche

1. System zum Speichern und Wiederverwenden von Wärme, enthaltend einen Wärmekollektor, einen ersten Wärmespeicher mit einem ersten Speichermedium und einen zweiten Wärmespeicher mit einem zweiten Speichermedium,
**dadurch gekennzeichnet, dass**
- der Wärmekollektor zumindest den ersten Wärmespeicher über eine Kollektorleitung speist,
- der erste Wärmespeicher mit dem der zweite Wärmespeicher über eine Wärmepumpen-Anordnung verbunden ist,
- die Wärmepumpen-Anordnung zumindest einen Kompressor, einen Verdampfer, einen Kondensator, und ein Expansionsventil umfasst,
- der erste Wärmespeicher den Verdampfer enthält und
- der zweite Wärmespeicher den Kondensator.

2. System nach Anspruch 1 **dadurch gekennzeichnet, dass** zumindest der erste Wärmespeicher ein Latentwärmespeicher ist und als erstes Speichermedium ein Phasenumwandlungsmittel enthält.

3. System nach Anspruch 1 oder 2 **dadurch gekennzeichnet, dass** der Verdampfer eine Verdampferleitung umfasst, die durch den ersten Wärmespeicher führt, wobei im Inneren der Verdampferleitung das Kältemittel geführt wird, und dass die Außenwand der Verdampferleitung direkt das erste Speichermedium berührt.

4. System nach einem der Ansprüche 1-3 **dadurch gekennzeichnet, dass** zumindest ein Teil der Verdampferleitung, die sich im ersten Wärmespeicher befindet, als Wellschlauch (vorzugsweise Metallwellschlauch) ausgebildet ist.

5. System nach einem der Ansprüche 1-4 **dadurch gekennzeichnet, dass** der vom Expansionsventil kommende Teil der Verdampferleitung in einem inneren Bereich des ersten Wärmespeichers geführt wird, und der zum Kompressor führende Teil der Verdampferleitung in einem äußeren Bereich geführt wird, wobei sich der äußere Bereich außerhalb des inneren Bereiches um den inneren Bereich befindet.

6. System nach einem der Ansprüche 1-5 **dadurch gekennzeichnet, dass** der Kondensator eine Kondensatorleitung (>10 bar) umfasst, die durch den zweiten Wärmespeicher führt, wobei im Inneren der Kondensatorleitung ein Kältemittel geführt wird, und die Außenwand der Kondensatorleitung direkt das Speichermedium (z.B. Wasser) berührt.

7. System nach Anspruch 7 **dadurch gekennzeichnet, dass** zumindest ein Teil der Kondensatorleitung, die sich im zweiten Wärmespeicher befindet, als Wellschlauch (vorzugsweise Metallwellschlauch) ausgebildet ist.

8. System nach einem der Ansprüche 2-7 **dadurch gekennzeichnet, dass** Expansionsventil und Kompressor so eingestellt oder so gewählt werden, dass sich in der Verdampferleitung ein Druck ergibt, der zu einer Verdampfungstemperatur des Kältemittels führt, die weniger als 15K von dem Schmelzpunkt oder dem Erweichungspunkt des Phasenumwandlungsmittel abweicht.

9. System nach Anspruch 1-8 **dadurch gekennzeichnet, dass** eine Steuerung vorgesehen ist, die den Kompressor und/oder das Expansionsventil in Abhängigkeit der an einem Messpunkt des zweiten Wärmespeichers gemessenen Temperatur steuert.

10. System nach einem der Ansprüche 1-9 **dadurch gekennzeichnet, dass** Expansionsventil und Kompressor so eingestellt oder so gewählt werden, dass sich in der Kondensatorleitung ein Druck ergibt, der zu einer Kondensationstemperatur des Kältemittels führt die weniger als 15K von der an einem Messpunkt des zweiten Wärmespeichers gemessenen Temperatur abweicht.

11. System nach einem der Ansprüche 1-10 **dadurch gekennzeichnet, dass** die Wärmequelle auch den zweiten Wärmespeicher speisen kann.

12. System nach einem der Ansprüche 1-11 **dadurch gekennzeichnet, dass** der erste Wärmespeicher mit einer Zusatzheizung ausgestattet sein, um die Temperatur des ersten Speichermediums im 1 - 5K anzuheben.

13. Latentwärmespeicher für ein System nach einem der Ansprüche 2-12.

14. Wärmetauscher zur Installation im zweiten Wärmespeicher eines Systems nach einem der Ansprüche 1-12, **dadurch gekennzeichnet, dass** er eine Kondensatorleitung (>10 bar) umfasst.

15. Wärmetauscher für ein System nach Anspruch 15, **dadurch gekennzeichnet, dass** dieser eine Hülle mit Öffnungen umfasst, sodass der Teil des Wärmetauschers, der die Kondensatorleitung beinhaltet, in direkter Fluidkommunikation mit dem Speichermedium des zweiten Wärmespeichers steht.
